# EUROPÄISCHE PATENTSCHRIFT

(11) **EP 3 771 850 B1**
(45) Veröffentlichungstag und Bekanntmachung des Hinweises auf die Patenterteilung: **13.04.2022**
(21) Anmeldenummer: 19188849.4
(22) Anmeldetag: 29.07.2019
(51) Int. Cl.: F16K 11/044, F16K 31/06, F16K 27/02

(54) **VENTILSYSTEM**
VALVE SYSTEM
SYSTÈME DE SOUPAPE

(43) Veröffentlichungstag der Anmeldung: 03.02.2021
(73) Patentinhaber: BIERI HYDRAULIK AG, CH-3097 Liebefeld (CH)
(72) Erfinder: Schneider, Wolfgang, 3600 Thun (CH); Josi, Ulrich, 3627 Heimberg (CH)
(74) Vertreter: Bartels und Partner, Patentanwälte

(56) Entgegenhaltungen:
- DE-B- 1 256 492
- US-A- 4 646 785
- US-A1- 2006 021 664
- US-A1- 2014 332 093

## Beschreibung

Die Erfindung betrifft ein Ventilsystem mit den Merkmalen im Oberbegriff des Anspruchs 1.

Aus DE 10 2012 023 750 B3 ist ein gattungsgemäßes Ventilsystem bekannt. Die zugehörige Ventileinrichtung des bekannten Systems weist zum Ansteuern der einzelnen Fluidanschlüsse im Ventilgehäuse einen Ventilkolben auf, der von einer Betätigungsmagneteinrichtung ansteuerbar längsverfahrbar in einem hohlzylinderartigen Führungsteil geführt ist, das stationär im Aufnahmeraum des Ventilgehäuses angeordnet über zu den Fluidanschlüssen im Ventilgehäuse korrespondierende Anschlusskanäle aufweist, die in Richtung des Ventilkolbens aus dem Führungsteil ausmünden. Die bekannte Ventileinrichtung kann über eine flanschartige Anschlussplatte oder als Einschraubpatrone konzipiert am Ventilgehäuse respektive Ventilblock mit seiner Betätigungsmagneteinrichtung festgelegt sein.

Es hat sich in der Praxis gezeigt, dass solche bekannten Ventilsysteme für Hochdruckanwendungen, insbesondere mit Fluiddrücken größer als 700 bar, nicht geeignet sind, da in typischen Ventilen der Betriebsdruck im Aktuator ansteht und dies in der Praxis mit den üblicherweise geschweißten Polrohren zu Lebensdauerproblemen führt. Durch die Dickwandigkeit aufgrund des hohen Druckes würde ohnehin die Betätigungskraft bei gleicher Magnetgröße empfindlich sinken, da die Polfläche kleiner wird.

Der meist auch stirnseitig anliegende Druck führt zu hohen Auspresskräften. Eine übliche Ventilkonstruktion, bei der der Druck in einem Einschraubgewinde ansteht, neigt bei höheren Drücken zu gefährlichen Ausschraub- oder sogar Ausreißvorgängen. Bei solch üblichen Einschraub-Sitzventilen wäre die zugehörige Not-Handbetätigung mit einem abgedichteten Stift bei Fluiddrücken größer als 700 bar im Polrohr derart schwergängig, dass eine Notbetätigung unmöglich wird.

Die DE 1 256 492 offenbart ein Ventilsystem bestehend aus mindestens einer betätigbaren Ventileinrichtung zum Ansteuern von voneinander verschiedenen Fluidanschlüssen eines Ventilgehäuses, das einen einen Boden bildenden Aufnahmeraum aufweist, in den die Fluidanschlüsse einmünden und in den die Ventileinrichtung eingesetzt ist, wobei zumindest in einem Teilbereich die Ventileinrichtung in stirnseitiger Anlage mit dem Boden des Aufnahmeraumes ist, wobei zumindest im Betrieb mittels mindestens einer Abdichteinrichtung dieser Teilbereich gegenüber dem Aufnahmeraum abgedichtet ist, wobei der Teilbereich aus einer Stirnfläche einer ersten Führungshülse gebildet ist, die, dem Boden des Aufnahmeraums zugewandt, einen Ventilkolben der Ventileinrichtung führt und wobei zwischen Ventilkolben und der ersten Führungshülse eine erste Abdichteinrichtung angeordnet ist.

Die US 2006/0021664 A1, die US 4 646 785 und die US 2014/0332093 A1 offenbaren weitere Ventilsysteme.

Ausgehend von diesem Stand der Technik liegt daher der Erfindung die Aufgabe zugrunde, unter Beibehalten der Vorteile der bekannten Lösungen ein günstiges Betriebsverhalten bei hoher Betriebssicherheit zu erreichen, diese dahingehend weiter zu verbessern, dass ein Ventilsystem geschaffen ist, mit dem auch ausgesprochen hohe Betriebsdrücke an den Fluidanschlüssen sicher beherrschbar sind.

Eine dahingehende Aufgabe löst ein Ventilsystem mit den Merkmalen des Patentanspruchs 1 in seiner Gesamtheit.

Gemäß dem kennzeichnenden Teil des Patentanspruchs 1 zeichnet sich das erfindungsgemäße Ventilsystem dadurch aus, dass die erste Führungshülse in einem hohlzylinderartigen Führungsteil schwimmend gelagert ist, dass zwischen erster Führungshülse und dem Führungsteil mindestens eine zweite Abdichteinrichtung angeordnet ist, und dass zwischen der Stirnseite des Führungsteils und dem Boden des Aufnahmeraums eine dritte Abdichteinrichtung angeordnet ist.

Da bereits die Stirnfläche der ersten Führungshülse gegenüber dem Boden des Aufnahmeraums eine Abdichtwirkung entfaltet, kann die zwischen dem Ventilkolben und der ersten Führungshülse wirkende Abdichtung in diesem Bereich in platzsparender Weise dorthin verlegt werden und die Führung des Ventilkolbens in der ersten Führungshülse mit unterstützen.

Durch das Umfassen der ersten Führungshülse mittels des hohlzylinderartigen Führungsteils ist eine weitere druckstabile Aussteifung für das Gesamtsystem erreicht, so dass sehr hohe Fluiddrücke beherrschbar sind. Das Führungsteil bildet dabei eine Art Schutzpanzerung aus, die die erste Führungshülse entsprechend druckentlastet. Durch die schwimmende Lagerung der ersten Führungshülse im Führungsteil kann diese unter Druckeinfluss an dem jeweils zuordenbaren Fluidanschluss in Richtung des Bodens des Aufnahmeraums angedrückt werden. Neben der genannten zweiten Abdichteinrichtung sorgt die dritte Abdichtung im stirnseitigen Bereich des Führungsteils zu einer Abdichtwirkung im randseitigen Bereich der stirnseitigen Anlage von Führungshülse und Führungsteil.

Dadurch, dass zumindest in einem Teilbereich die Ventileinrichtung in stirnseitiger Anlage mit dem Boden des Aufnahmeraums ist und dass zumindest im Betrieb mittels mindestens einer Abdichteinrichtung dieser Teilbereich gegenüber dem Aufnahmeraum abgedichtet ist, ist die Ventileinrichtung mit ihren Komponenten gegenüber dem Boden des Aufnahmeraums des Ventilgehäuses mit einer relativ großen Abstützfläche abgestützt, so dass sich mit der erfindungsgemäßen Lösung insoweit sehr hohe Drücke an den Fluidanschlüssen sicher beherrschen lassen. Aufgrund der genannten Flächenabstützung ist dergestalt im Bereich der Anlage der Ventileinrichtung mit dem Boden des Aufnahmeraums auch eine relevante gegenseitige Abdichtung von fluidführenden Teilen des Systems erreicht, was die weiteren Dichtungen der Abdichteinrichtung entsprechend entlastet, so dass diese vom Bauraumvolumen reduzierbar dennoch eine Hochdruckanwendung erlauben, ohne dass man gezwungen wäre, das Ventil sehr groß zu dimensionieren, was sich aufgrund des üblicherweise eingeschränkten Einbauvolumens in Ventilgehäusen respektive in Ventilblöcken ohnehin verbietet.

Für eine drucksteife Ausbildung des Ventilsystems mit verbesserter Abdichtwirkung ist darüber hinaus vorzugsweise vorgesehen, dass der Ventilkolben entlang einer zweiten Führungshülse verfahrbar geführt ist, dass zwischen dem Ventilkolben und der zweiten Führungshülse eine vierte Abdichteinrichtung angeordnet ist, und dass zwischen der zweiten Führungshülse und dem Führungsteil eine fünfte Abdichteinrichtung angeordnet ist.

Dabei kann vorzugsweise vorgesehen sein, dass die zweite Führungshülse in dem Führungsteil gleichfalls schwimmend gelagert ist, dass das Führungsteil auf seiner Innenseite durchgehend einen gleichen Innendurchmesser aufweist, und dass zwischen dem Führungsteil und dem Ventilgehäuse weitere Abdichteinrichtungen angeordnet sind, die die Fluidanschlüsse im Bereich ihrer Einmündung in den Aufnahmeraum des Ventilgehäuses gegeneinander abdichten. Dadurch, dass die zweite Führungshülse in dem Führungsteil gleichfalls schwimmend gelagert ist wie die erste Führungshülse, können die Anschläge dieser Führungshülsen an einem Boden des Aufnahmeraums sowie an einer der diesem Boden abgewandten Stirnseite einer der Führungshülsen erfolgen.

Sofern im Rahmen der vorliegenden Erfindungsbeschreibung von "schwimmend gelagert" die Rede ist, schließt dies auch Ausführungsformen mit ein, bei denen die zugehörigen Führungshülsen derart leicht eingepresst sind, unter der Wirkung einer Feder die jeweilige Führungshülse nicht verschoben wird, solange das genannte Teil noch nicht im Aufnahmeraum eingebaut respektive festgelegt ist. Insoweit fallen also noch Lösungen unter die Angabe "schwimmend gelagert", die dahingehend ausgestaltet sind, dass sie zumindest unter Druck verschiebbar gelagert sind. Anstelle einer "schwimmend gelagerten" respektive in diesem Sinne verschiebbaren Führungshülse sind alternativ auch Ausführungsformen der Ventilsystemkonstruktion denkbar, bei der die Führungshülse stationär in ihrem vorgesehenen Einbauzustand festgelegt ist.

Die Verfahrbewegung des Ventilkolbens zwischen den beiden Führungshülsen wird von einem Energiespeicher, vorzugsweise in Form einer Druckfeder, die im Druckraum angeordnet ist, mit unterstützt, die sich dabei mit ihrem einen freien Ende an der ersten Führungshülse und mit ihrem anderen freien Ende an dem Ventilkolben abstützt.

Das erfindungsgemäße Ventilsystem lässt sich für zwei Fluidanschlüsse im Ventilgehäuse einsetzen, aber auch für mehrere Fluidanschlüsse, insbesondere in Form von drei Fluidanschlüssen. Dadurch, dass die jeweilige Führungshülse von dem hohlzylinderartigen Führungsteil druckmäßig entlastet ist, kommt es an der jeweiligen Führungshülse auch zu keiner ungewollten Verformung im Bereich des Ventilsitzes, so dass dergestalt über die Steuerkanten der genannten Ventilsitze ein funktionssicherer Betrieb für den Ventilkolben und das Ansteuern der Fluidanschlüsse realisiert ist.

Sofern vorzugsweise die Führungshülsen als Gleichteile ausgebildet sind, lassen sich Herstellkosten sparen und Fehler bei der Montage des Ventilsystems vermeiden. Hierzu trägt auch mit bei, wenn das Führungsteil einen durchgehend gleichen Innendurchmesser aufweist.

Weitere vorteilhafte Ausführungsformen des erfindungsgemäßen Ventilsystems sind Gegenstand der Unteransprüche. Hierzu zählen weitere Dichteinrichtungen, die Realisierung der Ventileinrichtung als Einschraub- oder Cartridge-Ventil sowie die Betätigung mittels einer Betätigungsmagneteinrichtung.

Insgesamt lässt sich mit dem erfindungsgemäßen System ein Wegesitzventil als zusammenhängende Baueinheit oder ein Wegesitzventil als Einschraubventil konzipieren, wobei der Ventilkolben nach beiden Verfahrrichtungen hin über jeweils zuordenbare Ventilsitze druckentlastet ist, so dass alle Fluidanschlüsse hochdruckbelastbar ausgeführt sein können, ohne dass das Polrohr oder die Polrohrhülse der Betätigungsmagneteinrichtung Fluiddrücken ausgesetzt sind. Dadurch ist eine Kombination von einem hochdruckbelastbaren Einschraubventil mit einer nicht geschweißten Polrohrhülse möglich, da diese einen magnetischen Bypass aufweist, welcher bei einer bestimmten magnetischen Flussdichte gesättigt ist. Da die Polrohrhülse des Betätigungsmagnetsystems keinen Druck erfährt, kann die Hülse zudem dünnwandig ausgeführt sein und durch die damit einhergehend erhöhte Polfläche und einen gestuften Magnetanker kann die Betätigungskraft für das Ventilsystem entscheidend angehoben werden.

Im Folgenden wird das erfindungsgemäße Ventilsystem anhand der Zeichnung näher erläutert. Dabei zeigen in prinzipieller und nicht maßstäblicher Darstellung die
- Fig. 1: einen Längsschnitt durch ein erstes Ausführungsbeispiel eines erfindungsgemäßen Ventilsystems;

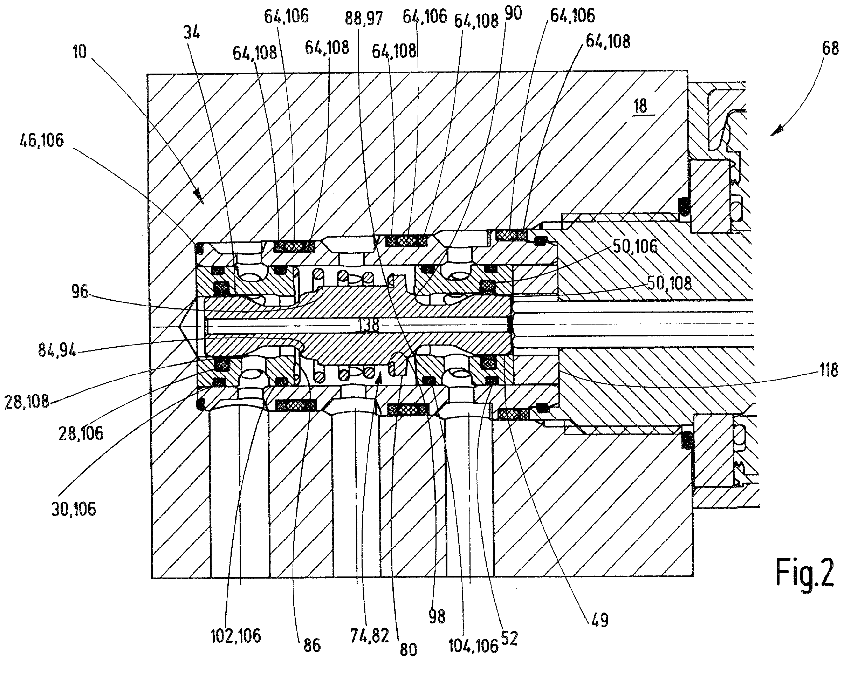

- Fig. 2: einen gegenüber Fig. 1 vergrößerten Teillängsschnitt des in Fig.1 mit I bezeichneten Bezirks des Ventilsystems;
- Fig. 3: einen Längsschnitt durch ein zweites Ausführungsbeispiel des erfindungsgemäßen Ventilsystems; und
- Fig. 4: einen Längsschnitt durch ein drittes Ausführungsbeispiel des erfindungsgemäßen Ventilsystems.

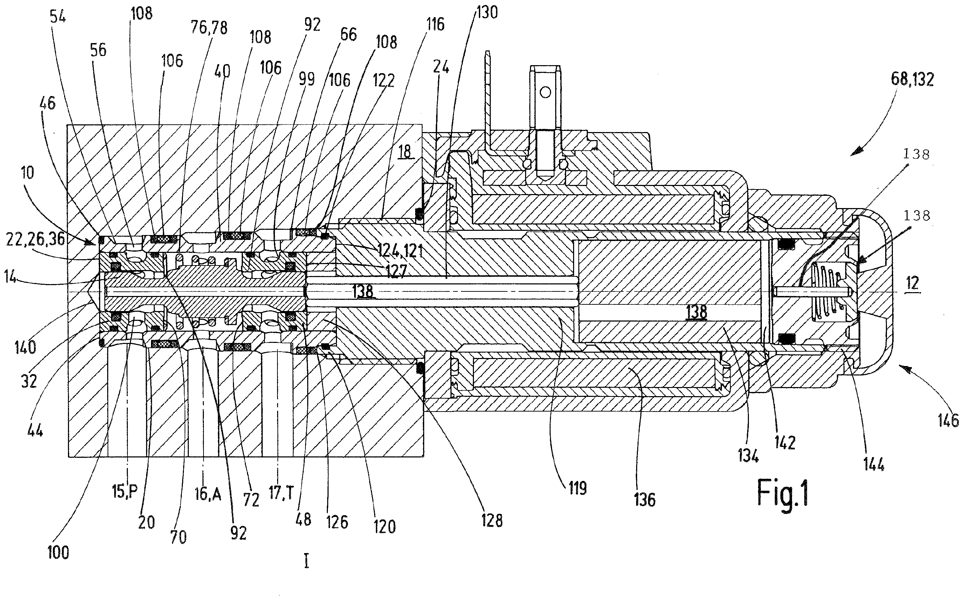

Fig. 1 zeigt ein erfindungsgemäßes Ventilsystem, das mindestens eine betätigbare Ventileinrichtung 10 mit einem entlang einer Längsachse 12 des Ventilsystems verfahrbaren Ventilkolben 14 zum Ansteuern von drei voneinander verschiedenen Fluidanschlüssen 15, 16, 17 eines Ventilgehäuses 18 aufweist. Das Ventilgehäuse 18 begrenzt einen Aufnahmeraum 20 mit, in den die Fluidanschlüsse 15, 16, 17 einmünden und dessen quer zu der Längsachse 12 ausgerichtete Wand seinen Boden 22 bildet. Von einer dem Boden 22 des Aufnahmeraums 20 gegenüberliegenden Öffnung 24 des Ventilgehäuses 18 aus ist in den Aufnahmeraum 20 des Ventilgehäuses 18 die Ventileinrichtung 10 derart eingesetzt, dass diese zumindest in einem Teilbereich 26 in stirnseitiger Anlage mit dem Boden 22 des Aufnahmeraums 20 ist, wobei der Teilbereich 26 zumindest im Betrieb des Ventilsystems mittels mindestens einer Abdichteinrichtung 28, 30, 46 gegenüber dem Aufnahmeraum abgedichtet ist.

In dem Aufnahmeraum 20 ist als Teil der Ventileinrichtung 10 eine erste Führungshülse 32 eingebracht, die koaxial zur Längsachse 12 des Ventilsystems ausgerichtet ist und den Ventilkolben 14 der Ventileinrichtung 10 an seinem dem Boden 22 des Aufnahmeraums 20 zugewandten Endbereich 34 umfassend führt. Der Teilbereich 26 ist aus einer dem Boden 22 des Aufnahmeraums 20 zugewandten Stirnfläche 36 der ersten Führungshülse 32 gebildet. In einer Ringnut am Innenumfang der ersten Führungshülse 32 ist eine erste Abdichteinrichtung 28 angeordnet, die den Ventilkoben 14 umfasst und die die erste Führungshülse 32 gegenüber dem Ventilkolben 14 abdichtet.

In dem Ventilgehäuse 18 ist als Teil der Ventileinrichtung 10 ein hohlzylinderartiges Führungsteil 40 eingebracht, das die erste Führungshülse 32 umfasst, die in dem Führungsteil 40 schwimmend gelagert ist. In einer weiteren Ringnut am Außenumfang der ersten Führungshülse 32 ist eine zweite Abdichteinrichtung 30 angeordnet, die die erste Führungshülse 32 umfasst und diese gegenüber dem Führungsteil 40 abdichtet. An seiner dem Boden 22 des Aufnahmeraums 20 zugewandten Stirnseite 44 weist das Führungsteil 40 eine Verringerung seines Außendurchmessers auf, die zur Aufnahme einer dritten Abdichteinrichtung 46 dient. Die dritte Abdichteinrichtung 46 umfasst das Führungsteil 40 und dichtet das Führungsteil 40 gegenüber dem Aufnahmeraum 20 in axialer und radialer Richtung ab. Im vorliegenden Ausführungsbeispiel liegen sowohl die erste Führungshülse 32 als auch das Führungsteil 40 mit ihren freien Stirnseiten 36, 44 am Gehäuseboden 22 an. Es besteht aber auch die Möglichkeit das Führungsteil 40 mit einem vorgebbaren axialen Abstand vom Boden 22 abzuheben, was eine radiale Dichtung am Außenumfang des Führungsteils 40 gegenüber dem Ventilgehäuse 18 in diesem Bereich notwendig macht und die dritte stirnseitige Abdichtung 46 kann entfallen (nicht dargestellt).

In dem Ventilgehäuse 18 ist als Teil der Ventileinrichtung 10 eine zweite Führungshülse 48 vorgesehen, in der der Ventilkolben 14 an seinem dem Boden 22 des Aufnahmeraums 20 abgewandten Endbereich 49 verfahrbar geführt ist. In einer Ringnut der zweiten Führungshülse 48 ist eine vierte Abdichteinrichtung 50 angeordnet, die den Ventilkolben 14 umfasst und die zweite Führungshülse 48 gegenüber dem Ventilkolben 14 abdichtet. In einer Ausnehmung am Außenumfang der zweiten Führungshülse 48 ist eine fünfte Abdichteinrichtung 52 angeordnet, die die zweite Führungshülse 48 umfasst und diese gegenüber dem Führungsteil 40 abdichtet.

Das Führungsteil 40, das einen durchgehend konstanten Innendurchmesser aufweist, umfasst die zweite Führungshülse 48, die genauso wie die erste Führungshülse 32 in dem Führungsteil 40 über ihr zugehöriges Dichtungssystem schwimmend gelagert ist.

Das Führungsteil 40 weist in Bereichen, in denen ein jeweiliger Fluidanschluss 15, 16, 17 aus dem Ventilgehäuse 18 in den Aufnahmeraum 20 einmündet, jeweils eine umlaufende Nut 54 auf, in der mehrere Durchgänge 56 für das Fluid der Fluidanschlüsse 15, 16, 17 vorgesehen sind. In einer Ausnehmung am Außenumfang des Führungsteils 40 ist, in Richtung der Längsachse 12 gesehen, zwischen der Nut 54 für einen ersten Fluidanschluss 15 und der Nut 54 für einen zweiten Fluidanschluss 16 sowie zwischen der Nut 54 für den zweiten Fluidanschluss 16 und der Nut 54 für den dritten Fluidanschluss 17 jeweils eine weitere Abdichteinrichtung 64 angeordnet, die das Führungsteil 40 gegenüber dem Ventilgehäuse 18 und die Fluidanschlüsse 15, 16 im Bereich ihrer Einmündung in den Aufnahmeraum 20 gegeneinander abdichten. Am Außenumfang des Führungsteils 40 ist auf der dem Boden 22 des Aufnahmeraums 20 abgewandten Seite außerhalb seiner benachbart angeordneten Nut 54 für den dritten Fluidanschluss 17 ein das Führungsteil 40 umlaufender Vorsprung 66 vorgesehen, an den sich auf seiner dem Boden 22 des Aufnahmeraums 20 abgewandten Seite eine weitere Abdichteinrichtung 64 anschließt, die das Führungsteil 40 gegenüber dem Ventilgehäuse 18 und gegenüber Komponenten einer Betätigungseinrichtung 68 für die Ventileinrichtung 10 abdichtet.

Die dem Boden 22 des Aufnahmeraums 20 abgewandte Stirnseite 70 der ersten Führungshülse 32 und die dem Boden 22 des Aufnahmeraums 20 zugewandte Stirnseite 72 der zweiten Führungshülse 48 begrenzen in dem Führungsteil 40 einen Druckraum 74 mit, in dem in jeder Verfahrstellung des Ventilkolbens 14 ein Druck aus mindestens einem der Fluidanschlüsse 15, 16, 17 ansteht.

In dem Druckraum 74 ist ein Energiespeicher 76 in Form einer spiralförmigen Druckfeder 78 angeordnet, die sich mit ihrem einen Ende an der dem Boden 22 des Aufnahmeraums 20 abgewandten Stirnseite 70 der ersten Führungshülse 32 und mit ihrem anderen Ende an einem den Ventilkolben 14 umlaufenden Vorsprung 80 abstützt. Der Ventilkolben 14 erstreckt sich durch die Druckfeder 78.

Der Ventilkolben 14 weist in seinem Mittenbereich 82 eine Durchmessererweiterung auf, die auf ihrer dem Boden 22 des Aufnahmeraums 20 zugewandten Seite eine erste Steuerkante 84 bildet, die mit einem Teil der von dem Boden 22 des Aufnahmeraums 20 abgewandten Stirnfläche 70 der ersten Führungshülse 32 unter Bildung eines ersten Ventilsitzes 86 zusammenwirkt. Eine dem Boden 22 des Aufnahmeraums 20 abgewandte Seite der Durchmessererweiterung im Mittenbereich 82 des Ventilkolbens 14 bildet eine zweite Steuerkante 88, die mit einem Teil der dem Boden 22 des Aufnahmeraums 20 zugewandten Stirnseite 72 der zweiten Führungshülse 48 unter Bildung eines zweiten Ventilsitzes 90 zusammenwirkt.

Die erste Führungshülse 32 weist einen konstanten Innendurchmesser auf bis auf ein Ringteil 92 mit demgegenüber verringertem Innendurchmesser, an den sich in Richtung des Ventilkolbens 14 der erste Ventilsitz 86 anschließt. An den mittels der ersten Führungshülse 32 geführten Endbereich 34 des Ventilkolbens 14, der dem Boden 22 des Aufnahmeraums 20 zugewandt und zylindrisch ausgebildet ist, schließt sich in Richtung seines Mittenbereichs 82 über einen Bereich eines verringerten Durchmessers in der Art einer konkaven Ausnehmung des Ventilkolbens 14 der im Durchmesser gegenüber dem Endbereich 34 vergrößerte Mittenbereich 82 des Ventilkolbens 14 an. Ausgehend von dem zylindrischen Endbereich 34 des Ventilkolbens 14 verjüngt sich der Bereich des verringerten Durchmessers zunächst konisch, worauf sich ein zylindrischer Bereich mit konstantem Durchmesser anschließt, auf den folgend sich der Ventilkolben 14 zum Mittenbereich 82 hin unter Bildung mindestens zweier Stufen 94, 96 erweitert, wobei eine erste Stufe 94 die erste Steuerkante 84 des Ventilkolbens 14 bildet und eine zweite Stufe 96 in den konstanten Durchmesser des Mittenbereichs 82 übergeht.

Entsprechend ist der Aufbau auf der anderen, gegenüberliegenden Seite des Ventilkolbens 14 mit der zweiten Führungshülse 48 gewählt. So ist der Ventilkolben 14 auf seiner dem Boden 22 des Aufnahmeraumes 20 abgewandten Hälfte entsprechend seiner dem Boden 22 zugewandten Hälfte ausgebildet mit Ausnahme des Vorsprungs 80 zum Angreifen der Druckfeder 78, der zwischen einer weiteren ersten Stufe 97 in Form der zweiten Steuerkante 88 und einer weiteren zweiten Stufe 98 radial vorstehend einen größeren Durchmesser aufweist als der Mittenbereich 82 des Ventilkolbens 14.

Für die hier bevorzugt vorgesehene Hochdruckanwendung ist die Verfahrstrecke des Ventilkolbens 14 zwischen seinen beiden Endhubstellungen, an denen dieser den ersten 86 bzw. den zweiten 90 Ventilsitz anfährt, für das vorliegende Ausführungsbeispiel ausgesprochen klein bemessen und beträgt zwischen 0,4 und 2 mm, bevorzugt 0,6 mm.

Die Führungshülsen 32, 48 sind als Gleichteile ausgebildet. Jede Führungshülse 32, 48 weist an ihrem Außenumfang eine umlaufende Nut 99 auf, in der mehrere Durchgänge100 für das Fluid der Fluidanschlüsse 15, 16, 17 vorgesehen sind. Die dahingehenden Durchgänge 100 sind im Wesentlichen deckungsgleich zu den radial angeordneten Fluid-Durchgängen 56 im Führungsteil 40, so dass Turbulenzen in der Fluidführung vermieden sind.

Die erste 28 und die zweite 30 Abdichteinrichtung sind in der ersten Führungshülse 32 auf derjenigen Seite außerhalb ihrer benachbart angeordneten Nut 99 vorgesehen, die dem Boden 22 des Aufnahmeraums 20 zugewandt ist. In einer Ringnut am Außenumfang der ersten Führungshülse 32 ist, auf der dem Boden 22 des Aufnahmeraums 20 abgewandten Seite außerhalb ihrer benachbart angeordneten Nut 99, eine sechste Abdichteinrichtung 102 angeordnet, die die erste Führungshülse 32 umfasst und die diese gegenüber dem Führungsteil 40 abdichtet.

Die vierte 50 und die fünfte 52 Abdichteinrichtung sind in der zweiten Führungshülse 48 auf derjenigen Seite außerhalb ihrer benachbart angeordneten Nut 99 vorgesehen, die dem Boden 22 des Aufnahmeraums 22 abgewandt ist. In einer Ringnut am Außenumfang der zweiten Führungshülse 48 ist, auf der dem Boden 22 des Aufnahmeraums 20 zugewandten Seite außerhalb ihrer benachbart angeordneten Nut 99, eine siebte Abdichteinrichtung 104 angeordnet, die die zweite Führungshülse 48 umfasst und diese gegenüber dem Führungsteil 40 abdichtet. Hier bilden die fünfte 52 und die siebte 104 Abdichteinrichtung die schwimmenden Lagerstellen für die zweite Führungshülse 48 aus. Sofern im Sinne der Erfindungsbeschreibung von Abdichteinrichtungen 28, 30, 46, 50, 52, 64, 102, 104 die Rede ist, die das Führungsteil 40 gegenüber dem Ventilgehäuse 18 abdichten sowie die beiden Führungshülsen 32, 48 gegenüber dem Ventilkolben 14, handelt es sich um kombinierte Systeme, die neben der Dichtfunktion auch jeweils eine Stütz- und Führungsfunktion wahrnehmen.

Jede der ersten bis sechsten und der weiteren Abdichteinrichtungen 28, 30, 46, 50, 52, 64, 102 ,104 weist jeweils einen Dichtring 106 auf. Bei der ersten 28 und der vierten 50 Abdichteinrichtung schließt sich demgemäß an den jeweiligen Dichtring 106 in Richtung zu der Längsachse 12 hin, also nach innen, ein Stütz- und Führungsring 108 an, der somit zwischen dem Ventilkolben 14 und dem jeweiligen Dichtring 106 angeordnet ist. Bei der weiteren Abdichteinrichtung 64, die zwischen der Nut 54 für den ersten 15 und der Nut 54 für den zweiten 16 Fluidanschluss angeordnet ist, und der weiteren Abdichteinrichtung 64, die zwischen der Nut 54 für den zweiten 16 und der Nut 54 für den dritten 17 Fluidanschluss angeordnet ist, schließt sich an den jeweiligen Dichtring 106 in Richtung der Längsachse 12 beidseitig jeweils ein solcher Stütz- und Führungsring 108 an. Bei der weiteren Abdichteinrichtung 64, die zwischen dem umlaufenden Vorsprung 66 des Führungsteils 40 und der Betätigungseinrichtung 68 angeordnet ist, schließt sich an den Dichtring 106 in Richtung der Längsachse 12 zu der Betätigungseinrichtung 68 hin nur ein Stütz- und Führungsring 108 an.

Die Abdichteinrichtungen 28, 30, 46, 50, 52, 64, 102, 104 sind dem Grunde nach in drei Gruppen einteilbar, die jeweils im Wesentlichen koaxial zur Längsachse 12 angeordnet sind. Die erste Gruppe ist gebildet aus der ersten 28 und der vierten 50 Abdichteinrichtung; die zweite Gruppe ist gebildet aus der zweiten 30 und der fünften 52, sechsten 102 sowie siebten 104 Abdichteinrichtung. Die dritte Gruppe ist gebildet aus den weiteren, vorstehend beschriebenen Abdichteinrichtungen 64, die das Führungsteil 40 radial umfassen. Der vorstehend beschriebene Gruppenaufbau bildet eine Art Gegenlager aus im Hinblick auf die auftretenden hohen dynamischen Druckbeanspruchungen, die auf die Komponenten des Ventilsystems in Form des Ventilkolbens 14, der Führungshülsen 32, 48, des Führungsteils 40 und des Ventilgehäuses 18 einwirken.

Die Ventileinrichtung 10 ist mittels der Betätigungseinrichtung 68 über eine Einschraubstrecke 116 im Ventilgehäuse 18 in der Art einer Einschraubpatrone in dem Aufnahmeraum 20 festgelegt. Dazu umfasst ein sich von der dem Boden 22 des Aufnahmeraums 20 zugewandten Stirnseite 118 des Polrohrs 119 in Richtung des Bodens 22 weg erstreckender, umlaufender Vorsprung 120 den dem Boden 22 des Aufnahmeraums 20 abgewandten Endbereich 121 des Führungsteils 40 unter Zwischenanordnung eines weiteren Dichtringes 122, wobei die dem Boden 22 des Aufnahmeraumes 20 zugewandte Stirnseite 118 des Pohlrohres 119 an der dem Boden 22 abgewandten Stirnseite 124 des Führungsteiles 40 zur Anlage gelangt. Die dem Boden 22 des Aufnahmeraums 20 zugewandte Stirnseite 126 des Vorsprungs 120 des Polrohrs 119 begrenzt dabei einen Raum mit für die der Betätigungseinrichtung 68 nächstliegende weitere Abdichteinrichtung 64 am Außenumfang des Führungsteils 40.

Zwischen der dem Boden 22 des Aufnahmeraums 20 zugewandten Stirnseite 118 des Polrohres 119 und der dem Boden 22 des Aufnahmeraums 20 abgewandten Stirnseite 127 der zweiten Führungshülse 48 ist, von dem Führungsteil 40 umfasst, ein scheibenförmiger Abstandshalter 128 angeordnet, der von einer Betätigungsstange 130 der Betätigungseinrichtung 68 durchgriffen ist, die auf den Ventilkolben 14 einwirkt.

Die Betätigungseinrichtung 68 weist einen Betätigungsmagneten 132 mit einem Magnetanker 134 auf, der bei Bestromen einer Spuleneinrichtung 136 der Betätigungseinrichtung 68 als sogenannter drückender Magnet auf die Betätigungsstange 130 in Richtung des Bodens 22 des Aufnahmeraums 20 einwirkt.

Ein Druckausgleichskanal 138 durchgreift den Ventilkolben 14, die Betätigungsstange 130 und den Magnetanker 134 sowie die Not-Handbetätigung 146 (siehe Fig. 1) und verbindet eine in den Boden 22 des Aufnahmeraums 20 eingebrachte Sacklochbohrung 140 mit demjenigen Teil eines Ankerraums 142, der dem Boden 22 des Aufnahmeraumes 20 abgewandt ist. Das dem Boden 22 des Aufnahmeraums 20 abgewandte Ende 144 des Polrohres 119 ist durch eine in das Polrohr 119 eingebrachte Nothandbetätigung 146 abgeschlossen, die im Ausführungsbeispiel nicht abgedichtet und dadurch einen Druckausgleich mit der Umgebung herstellt, auch wenn das Dichtsystem kleinste Leckagen aufweisen sollte. Es kann sich somit nie ein gefährlicher Druck im Polrohr aufbauen. Vor allem gelangt durch diesen Aufbau der Umgebungsdruck auch bis in den abgedichteten Teilbereich 26 des Aufnahmeraums 20. Dadurch bleiben die Führungshülsen 32, auch wenn sie nicht im Führungsteil 40 fixiert sein sollten, auch dann an Ort und Stelle, wenn der Druck im Raum 74 auf nahe Umgebungsdruck abfallen sollte. Anstelle einer Betätigungsmagneteinrichtung 68 kann auch ein von Hand betätigbares Hebelwerk (nicht dargestellt) treten, das auf den Ventilkolben 14 einwirkt.

Ein großer Vorteil der erfindungsgemäßen Systemlösung ist somit, dass an die Fluidanschlüsse 15, 16, 17 beliebig Druckversorgungs-, Verbraucher-, sowie Tank- und Rücklaufeinrichtungen angeschlossen werden können.

Im vorliegenden Ausführungsbeispiel ist der erste Fluidanschluss 15 mit einer Druckversorgung P, der zweite Fluidanschluss 16 mit einem Arbeits- oder Verbraucheranschluss A und der dritte Fluidanschluss 17 mit einem Tank- oder Rücklaufanschluss T verbunden. Insgesamt ist die Anschlussbelegung derart gewählt, dass in vorteilhafter Weise der Ventilkolben 14 immer in Richtung eines Anschlages in Form seiner beiden gegenüberliegenden Ventilsitze 86, 90 mit Krafthaltung bewegt ist, was die Abdichtwirkung, insbesondere bei den hier angesprochenen, sehr hohen Drücken (> 700 bar) sichergestellt. Der Vollständigkeit halber sei angemerkt, dass der Stift der Not-Handbetätigung 146 auch gegenüber der Umgebung abgedichtet sein darf, wenn nicht mit hydraulischen Leckagen gerechnet werden muss. Ebenso kann bei einer solchen Ausführung der Druck im Senkungsboden mit einem hydraulischen Anschluss/Kanal im Senkungsboden entlastet sein. Bei einer allfälligen Fixierung der Führungshülsen z.B. mittels Laserschweißung darf der Entlastungsdruck größer als der niedrigste im Betrieb erwartete Druck im Raum 74 sein. Auf diese Weise lässt sich dann auch mittels eines nicht-durchbohrten Kegels eine hydraulische Ansteuerung realisieren. Die Führungshülsen können, wie bereits ausgeführt, eingepresst werden, damit diese sich im noch nicht vollständig eingebauten Zustand auch nicht verschieben können. Dabei kann die Fixierung mittels einer Laserschweißnaht, mittels eines Lots oder Klebstoffs sowie ähnlichen Mitteln veranlasst werden. Ein Vorteil des Fixierens der Führungshülsen im Führungsteil 40 ist, dass dieses sich infolge des Druckes im Aufnahmeraum längt und dadurch ein Losdrehen gehemmt ist, insbesondere wenn ein Material-Kriechen die Gewindemontagevorspannkraft verringert. Dies war bislang nicht notwendig, könnte sich jedoch bei noch höherem Druck oder bei speziellen Materialien als nötig erweisen. Auch wird ein Teil der hydraulischen Kraft auf die Führungshülsen im Führungsteil aufgenommen und die Kraft auf die Schraubenverbindung und den Senkungsboden verringert. Ein weiterer Vorteil des Fixierens ist, dass der Druck am Senkungsboden auch etwas höher ausfallen darf und sich die Führungshülsen nicht nach innen verschieben können.

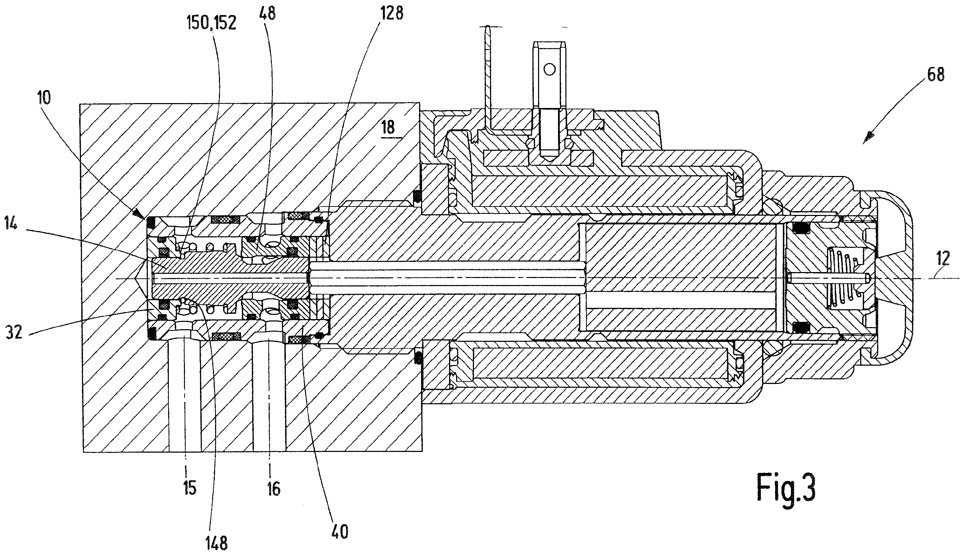

Fig. 3 zeigt ein zweites Ausführungsbeispiel des erfindungsgemäßen Ventilsystems, das sich von dem Ausführungsbeispiel gemäß Fig. 1 wie folgt unterscheidet.

Der dem Boden 22 des Aufnahmeraums 20 zugewandte, zylindrische Endbereich 34 des Ventilkobens 14 geht unter Bildung einer einzelnen Stufe 148 direkt in dessen zylindrischen Mittenbereich 82 über, so dass der Ventilkolben 14 des zweiten Ausführungsbeispiels im Vergleich zu dem des ersten Ausführungsbeispiels verkürzt ausgebildet ist. Die von dem Boden 22 des Aufnahmeraums 20 abgewandte Hälfte des Ventilkolbens 14 entspricht hingegen im Wesentlichen der des ersten Ausführungsbeispiels.

Die erste Führungshülse 32 ist gegenüber der vorstehend beschriebenen Lösung axial verkürzt als Ring ausgebildet, der einen sich von seiner dem Boden 22 des Aufnahmeraumes 20 abgewandten Stirnseite 70 in Richtung der Längsachse 12 wegerstreckenden Vorsprung 150 aufweist, dessen Stirnseite 152 als Anschlag für die Stufe 148 des Ventilkolbens 14 dient. In einer Ringnut am Innenumfang der ersten Führungshülse 32 ist die erste Abdichteinrichtung 28 angeordnet und in einer weiteren Ringnut am Außenumfang der ersten Führungshülse 32 ist die zweite Abdichteinrichtung 30 angeordnet.

Im Ventilgehäuse 18 sind nunmehr zwei voneinander verschiedene Fluidanschlüsse 15, 16 vorgesehen, so dass das Führungsteil 40 in den Bereichen des Eintritts der beiden Fluidanschlüsse 15, 16 in den Aufnahmeraum 20 nur jeweils eine Nut 54 mit Durchgängen 56 für das Fluid der Fluidanschlüsse 15,16 aufweist. Zudem sind zwischen der dem Boden 22 des Aufnahmeraums 20 zugewandten Stirnseite 118 des Polrohres 119 und der dem Boden 22 des Aufnahmeraums 20 abgewandten Stirnseite 127 der zweiten Führungshülse 48, von dem Führungsteil 40 umfasst, als Abstandshalter 128 drei Scheiben angeordnet.

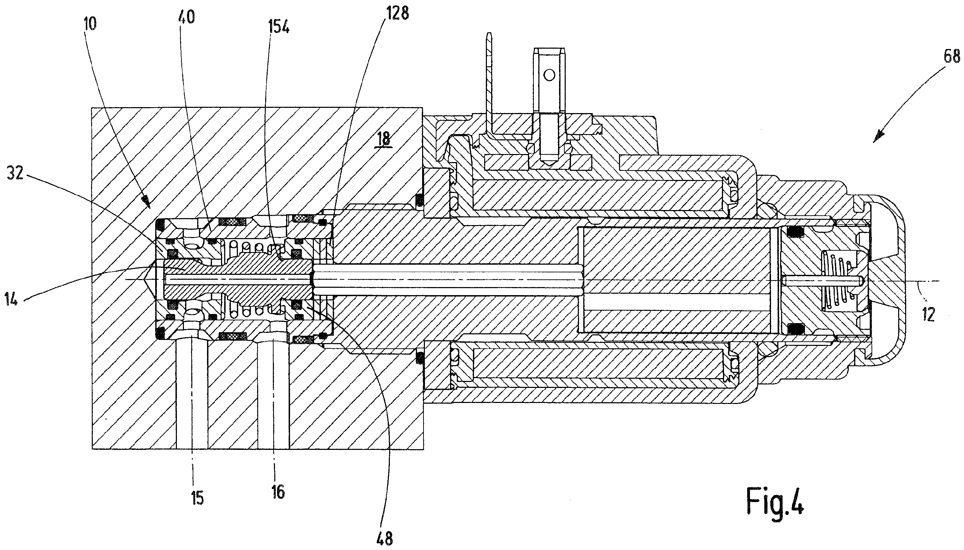

Fig. 4 zeigt ein drittes Aufführungsbeispiel des erfindungsgemäßen Ventilsystems, das sich von dem Ausführungsbeispiel gemäß Fig. 1 wie folgt unterscheidet.

Der konstante Durchmesser an dem dem Boden 22 abwandten Endbereich 49 des Ventilkobens 14 geht unter Bildung des Vorsprungs 80 zum Abstützen der Ventilfeder 78 direkt in dessen Mittenbereich 82 über, so dass der Ventilkolben 14 des dritten Ausführungsbeispiels im Vergleich zu dem des ersten Ausführungsbeispiels verkürzt ausgebildet ist. Die dem Boden 22 des Aufnahmeraumes 20 zugewandte Hälfte des Ventilkolbens 14 entspricht dabei der des ersten Ausführungsbeispiels.

Die zweite Führungshülse 48 ist nunmehr als Ring ausgebildet, der einen sich von seiner dem Boden 22 des Aufnahmeraums 20 zugewandten Stirnseite 72 in Richtung der Längsachse 12 wegerstreckenden Anschlag 154 für den Vorsprung 80 des Ventilkolbens 14 aufweist, an dem sich die Ventil-Druckfeder 78 abstützt. In einer Ringnut am Innenumfang der ersten Führungshülse 32 ist die vierte Abdichteinrichtung 50 angeordnet und in einer weiteren Ringnut am Außenumfang der ersten Führungshülse 32 ist die fünfte Abdichteinrichtung 52 angeordnet entsprechend der Lösung nach der Fig. 1.

Hinsichtlich der Fluidanschlüsse 15, 16 und der Abstandshalter 128 entspricht das dritte Ausführungsbeispiel dem zweiten Ausführungsbeispiel. Sowohl bei dem zweiten als auch bei dem dritten Ausführungsbeispiel wird durch Betätigen des Magnetsystems 68 der Ventilkolben 14 einmal in seine die Fluidanschlüsse 15, 16 miteinander verbindende Durchlassstellung bzw. in sein diese voneinander trennende Sperrstellung gebracht.

## Patentansprüche

1. Ventilsystem bestehend aus mindestens einer betätigbaren Ventileinrichtung (10) zum Ansteuern von voneinander verschiedenen Fluidanschlüssen (15, 16, 17) eines Ventilgehäuses (18), das einen einen Boden (22) bildenden Aufnahmeraum (20) aufweist, in den die Fluidanschlüsse (15, 16, 17) einmünden und in den die Ventileinrichtung (10) eingesetzt ist, wobei zumindest in einem Teilbereich (26) die Ventileinrichtung (10) in stirnseitiger Anlage mit dem Boden (22) des Aufnahmeraumes (20) ist, wobei zumindest im Betrieb mittels mindestens einer Abdichteinrichtung (28, 30) dieser Teilbereich (26) gegenüber dem Aufnahmeraum (20) abgedichtet ist, wobei der Teilbereich (26) aus einer Stirnfläche (36) einer ersten Führungshülse (32) gebildet ist, die, dem Boden (22) des Aufnahmeraums (20) zugewandt, einen Ventilkolben (14) der Ventileinrichtung (10) führt und wobei zwischen Ventilkolben (14) und der ersten Führungshülse (32) eine erste Abdichteinrichtung (28) angeordnet ist, **dadurch gekennzeichnet, dass** die erste Führungshülse (32) in einem hohlzylinderartigen Führungsteil (40) schwimmend gelagert ist, dass zwischen erster Führungshülse (32) und dem Führungsteil (40) mindestens eine zweite Abdichteinrichtung (30) angeordnet ist, und dass zwischen der Stirnseite (44) des Führungsteils (40) und dem Boden (22) des Aufnahmeraums (20) eine dritte Abdichteinrichtung (46) angeordnet ist.

2. Ventilsystem nach Anspruch 1, **dadurch gekennzeichnet, dass** der Ventilkolben (14) entlang einer zweiten Führungshülse (48) verfahrbar geführt ist, dass zwischen dem Ventilkolben (14) und der zweiten Führungshülse (48) eine vierte Abdichteinrichtung (50) angeordnet ist, und dass zwischen der zweiten Führungshülse (48) und dem Führungsteil (40) eine fünfte Abdichteinrichtung (52) angeordnet ist.

3. Ventilsystem nach Anspruch 2, **dadurch gekennzeichnet, dass** die zweite Führungshülse (48) in dem Führungsteil (40) schwimmend gelagert ist, dass das Führungsteil (40) auf seiner Innenseite durchgehend einen gleichen Innendurchmesser aufweist, und dass zwischen dem Führungsteil (40) und dem Ventilgehäuse (18) weitere Abdichteinrichtungen (64) angeordnet sind, die die Fluidanschlüsse (15, 16, 17) im Bereich ihrer Einmündung in den Aufnahmeraum (20) des Ventilgehäuses (18) gegeneinander abdichten.

4. Ventilsystem nach Anspruch 2 oder 3, **dadurch gekennzeichnet, dass** die beiden Führungshülsen (32, 48) mit ihren einander zugewandten Stirnseiten (70, 72) einen Druckraum (74) mit begrenzen, in dem in jeder Verfahrstellung des Ventilkolbens (14) ein Druck aus mindestens einem der Nutzanschlüsse (15, 16, 17) ansteht.

5. Ventilsystem nach Anspruch 4, **dadurch gekennzeichnet, dass** in dem Druckraum (74) ein Energiespeicher (76), vorzugsweise in Form einer Druckfeder (78), angeordnet ist, die sich mit ihrem einen Ende an der ersten Führungshülse (32) und mit ihrem anderen Ende an dem Ventilkolben (14) abstützt.

6. Ventilsystem nach einem der Ansprüche 2 bis 5, **dadurch gekennzeichnet, dass** der Ventilkolben (14) mit mindestens einer Steuerkante (84, 88) mit der ersten (32) oder der zweiten (48) Führungshülse oder bei Einsatz in einem Ventilgehäuse (18) mit drei Nutzanschlüssen (15, 16 ,17) mit zwei Steuerkanten (84, 88) mit beiden Führungshülsen (32, 48) zusammenwirkt.

7. Ventilsystem nach Anspruch 6, **dadurch gekennzeichnet, dass** bei Verwendung von zwei Führungshülsen (32, 48) für drei Nutzanschlüsse (15, 16, 17) die Führungshülsen (32, 48) als Gleichteile ausgebildet sind.

8. Ventilsystem nach einem der vorstehenden Ansprüche, **dadurch gekennzeichnet, dass** zumindest bei einer Führungshülse (32, 48) eine jeweils zuordenbare weitere Abdichteinrichtung (102, 104) zwischen dieser Führungshülse (32, 48) und dem Führungsteil (40) in einer Ebene quer zur Verfahrrichtung des Ventilkolbens (14) liegt, in der eine weitere benachbarte Abdichteinrichtung (64) zwischen der Führungshülse (32, 48) und dem Ventilgehäuse (18) angeordnet ist.

9. Ventilsystem nach einem der vorstehenden Ansprüche, **dadurch gekennzeichnet, dass** die Ventileinrichtung (10) mittels einer Betätigungseinrichtung (68) über eine Einschraubstrecke (116) im Ventilgehäuse (18) in der Art einer Einschraubpatrone im Aufnahmeraum (20) festgelegt ist.

10. Ventilsystem nach Anspruch 9, **dadurch gekennzeichnet, dass** die Betätigungseinrichtung (68) einen bestrombaren Betätigungsmagneten (132) aufweist und dass zwischen dem Polrohr (119) und der zweiten Führungshülse (48) mindestens ein Abstandshalter (128) angeordnet ist, der von der Betätigungsstange (130) des Betätigungsmagneten (132) durchgriffen ist, die auf den Ventilkolben (14) einwirkt.

11. Ventilsystem nach Anspruch 10, **dadurch gekennzeichnet, dass** ein Druckausgleichskanal (138) den Ventilkolben (14), die Betätigungsstange (130), den Magnetanker (134) und eine Not-Handbetätigung (146) durchgreift und dass der Druckausgleichskanal (138) eine in den Boden (22) des Aufnahmeraums (20) auch eingebrachte Sacklochbohrung (140) mit demjenigen Teil eines Ankerraums (142) verbindet, der dem Boden (22) des Aufnahmeraumes (20) abgewandt ist.

12. Ventilsystem nach Anspruch 11, **dadurch gekennzeichnet, dass** das dem Boden (22) des Aufnahemraums (20) abgewandte Ende des Polrohres (119) durch die in das Polrohr (119) eingebrachte Nothandbetätigung (146) abgeschlossen ist.

## Claims

1. Valve system consisting of at least one operable valve device (10) for controlling fluid ports (15, 16, 17), differing from each other, of a valve housing (18) which has a receiving chamber (20), forming a base (22), into which the fluid ports (15, 16, 17) discharge and into which the valve device (10) is inserted, wherein, at least in a partial region (26), the valve device (10) is in front-end contact with the base (22) of the receiving chamber (20), wherein, at least in operation, this partial region (26) is sealed with respect to the receiving chamber (20) by means of at least one sealing device (28, 30), wherein the partial region (26) is formed from an end face (36) of a first guide sleeve (32) which, directed towards the base (22) of the receiving chamber (20), guides a valve piston (14) of the valve device (10) and wherein a first sealing device (28) is arranged between the valve piston (14) and the first guide sleeve (32), **characterised in that** the first guide sleeve (32) is mounted in a hollow-cylindrical guide part (40) in a floating manner, **in that** at least one second sealing device (30) is arranged between the first guide sleeve (32) and the guide part (40), and **in that** a third sealing device (46) is arranged between the front face (44) of the guide part (40) and the base (22) of the receiving chamber (20).

2. Valve system according to claim 1, **characterised in that** the valve piston (14) is displaceably guided along a second guide sleeve (48), **in that** a fourth sealing device (50) is arranged between the valve piston (14) and the second guide sleeve (48), and **in that** a fifth sealing device (52) is arranged between the second guide sleeve (48) and the guide part (40).

3. Valve system according to claim 2, **characterised in that** the second guide sleeve (48) is mounted in the guide part (40) in a floating manner, **in that** the guide part (40) continuously has an equal internal diameter on its inner side, and **in that** further sealing devices (64) are arranged between the guide part (40) and the valve housing (18) which sealing devices seal the fluid ports (15, 16, 17) against each other in the region where they discharge into the receiving chamber (20) of the valve housing (18).

4. Valve system according to claim 2 or 3, **characterised in that** the two guide sleeves (32, 48) with their front faces (70, 72) directed towards each other also define a pressure chamber (74) in which a pressure is present from at least one of the work ports (15, 16, 17) in every travel position of the valve piston (14).

5. Valve system according to claim 4, **characterised in that** an energy accumulator (76), preferably in the form of a compression spring (78), is arranged in the pressure chamber (74), which compression spring is supported with its one end on the first guide sleeve (32) and with its other end on the valve piston (14).

6. Valve system according to one of claims 2 to 5, **characterised in that** the valve piston (14) with at least one control edge (84, 88) cooperates with the first (32) or the second (48) guide sleeve or, when used in a valve housing (18) with three work ports (15, 16, 17) with two control edges (84, 88), cooperates with both guide sleeves (32, 48).

7. Valve system according to claim 6, **characterised in that**, when two guide sleeves (32, 48) are used for three work ports (15, 16, 17), the guide sleeves (32, 48) are configured as common parts.

8. Valve system according to one of the preceding claims, **characterised in that**, at least in the case of one guide sleeve (32, 48), a further assignable sealing device (102, 104) in each case is located between this guide sleeve (32, 48) and the guide part (40) in a plane transverse to the direction of travel of the valve piston (14), in which plane a further adjacent sealing device (64) is arranged between the guide sleeve (32, 48) and the valve housing (18).

9. Valve system according to one of the preceding claims, **characterised in that** the valve device (10) is fixed in the receiving chamber (20) by means of an actuating device (68) via a screw-in section (116) in the valve housing (18) in the manner of a screw-in cartridge.

10. Valve system according to claim 9, **characterised in that** the actuating device (68) comprises an energisable actuating magnet (132) and **in that** at least one spacer (128) is arranged between the pole tube (119) and the second guide sleeve (48), through which spacer the actuating rod (130) of the actuating solenoid (132) passes, which actuating rod acts on the valve piston (14).

11. Valve system according to claim 10, **characterised in that** a pressure equalisation channel (138) passes through the valve piston (14), the actuating rod (130), the solenoid armature (134) and an emergency manual actuator (146) and **in that** the pressure equalisation channel (138) connects a blind hole (140), also incorporated in the base (22) of the receiving chamber (20), to the part of an armature chamber (142) which is directed away from the base (22) of the receiving chamber (20).

12. Valve system according to claim 11, **characterised in that** the end of the pole tube (119) directed away from the base (22) of the receiving chamber (20) is closed by the emergency manual actuator (146) incorporated in the pole tube (119).

## Revendications

1. Système de soupape constitué d'au moins un dispositif (10) de soupape pouvant être actionné pour la commande de raccords (15, 16, 17) pour du fluide différents les uns des autres d'un corps (18) de soupape qui a, formant un fond (22), un espace (20) de réception, dans lequel débouchent les raccords (15, 16, 17) pour du fluide et dans lequel le dispositif (10) de soupape est inséré, dans lequel, au moins dans une région (26) partielle, le dispositif (10) de soupape est en contact du côté frontal avec le fond (22) de l'espace (20) de réception, dans lequel au moins en fonctionnement, au moyen d'au moins un dispositif (28, 30) d'étanchéité, cette région (26) partielle est rendue étanche par rapport à l'espace (20) de réception, dans lequel la région (26) partielle est formée d'une surface (36) frontale d'un premier manchon (32) de guidage qui, tourné vers le fond (22) de l'espace (20), guide un piston (14) de soupape du dispositif (10) de soupape et dans lequel un premier dispositif (28) d'étanchéité est disposé entre le piston (14) de soupape et le premier manchon (32) de guidage, **caractérisé en ce que** le premier manchon (32) de guidage est monté flottant dans une partie (40) de guidage de type en cylindre creux, **en ce qu'**au moins un deuxième dispositif (30) d'étanchéité est disposé entre le premier manchon (32) de guidage et la partie (40) de guidage et **en ce qu'**un troisième dispositif (46) d'étanchéité est disposé entre le côté (44) frontal de la partie (40) de guidage et le fond (22) de l'espace (20) de réception.

2. Système de soupape suivant la revendication 1, **caractérisé en ce que** le piston (14) de soupape est guidé, avec possibilité de se déplacer, le long d'un deuxième manchon (48) de guidage, **en ce qu'**un quatrième dispositif (50) d'étanchéité est disposé entre le piston (14) de soupape et le deuxième manchon (48) de guidage et **en ce qu'**un cinquième dispositif (52) d'étanchéité est disposé entre le deuxième manchon (48) de guidage et la partie (40) de guidage.

3. Système de soupape suivant la revendication 2, **caractérisé en ce que** le deuxième manchon (48) de guidage est monté flottant dans la partie (40) de guidage, **en ce que** la partie (40) de guidage a, sur sa face intérieure d'une manière continue, un même diamètre intérieur et **en ce qu'**entre la partie (40) de guidage et le corps (18) de la soupape sont disposés d'autres dispositifs (64) d'étanchéité, qui rendent étanches mutuellement les raccords (15, 16, 17) pour du fluide dans la partie de leur embouchure dans l'espace (20) de réception du corps (18) de la soupape.

4. Système de soupape suivant la revendication 2 ou 3, **caractérisé en ce que** les deux manchons (32, 48) de guidage délimitent, par leurs côtés (70, 72) frontaux tournés l'un vers l'autre, un espace (74) sous pression, dans lequel il apparaît, dans chaque position de déplacement du piston (14) de soupape, une pression d'au moins l'un des raccords (15, 16, 17) utiles.

5. Système de soupape suivant la revendication 4, **caractérisé en ce que**, dans l'espace (74) sous pression est disposé un accumulateur (76) d'énergie, de préférence sous la forme d'un ressort (78) de compression, qui s'appuie par l'une de ses extrémités sur le premier manchon (32) de guidage et par son autre extrémité sur le piston (14) de soupape.

6. Système de soupape suivant l'une des revendications 2 à 5, **caractérisé en ce que** le piston (14) de soupape coopère par au moins un bord (84, 88) de commande avec le premier (32) ou le deuxième (48) manchon de guidage ou, s'il est utilisé dans un corps (18) de soupape ayant trois raccords (15, 16, 17) utiles, par deux bords (84, 88) de commande avec deux manchons (32, 48) de guidage.

7. Système de guidage suivant la revendication 6, **caractérisé en ce que**, lorsque deux manchons (32, 48) de guidage sont utilisés pour trois raccords (15, 16, 17) utiles, les manchons (32, 48) de guidage sont constitués sous la forme de pièces pareilles.

8. Système de guidage suivant l'une des revendications précédentes, **caractérisé en ce qu'**au moins, pour un manchon (32, 48) de guidage, un autre dispositif (102, 104) d'étanchéité pouvant être associé respectivement se trouve entre ce manchon (32, 48) de guidage et la partie (40) de guidage dans un plan transversal à la direction de déplacement du piston (14) de soupape, un autre dispositif (64) voisin d'étanchéité étant disposé entre le manchon (32, 48) de guidage et le corps (18) de la soupape.

9. Système de guidage suivant l'une des revendications précédentes, **caractérisé en ce que** le dispositif (10) de soupape est fixé dans l'espace (20) de réception à la manière d'une cartouche de vissage, au moyen d'un dispositif (68) d'actionnement sur une zone (116) de vissage du corps (18) de la soupape.

10. Système de guidage suivant la revendication 9, **caractérisé en ce que** le dispositif (68) d'actionnement a un aimant (132) d'actionnement pouvant être alimenté en courant électrique et **en ce que**, entre le tube (119) polaire et le deuxième manchon (48) de guidage, est disposé au moins une entretoise (128), qui est traversée par la barre (130) d'actionnement de l'aimant (132) d'actionnement, qui agit sur le piston (14) de soupape.

11. Système de guidage suivant la revendication 10, **caractérisé en ce qu'**un conduit (138) de compensation de la pression traverse le piston (14) de soupape, la barre (130) d'actionnement, l'armature (134) d'aimant et un actionnement (146) manuel d'urgence et **en ce que** le conduit (138) de compensation de la pression met un trou (140) borgne, ménagé également dans le fond (22) de l'espace (20) de réception, en communication avec la partie d'un espace (142) d'armature, qui est loin du fond (22) de l'espace (20) de réception.

12. Système de guidage suivant la revendication 11, **caractérisé en ce que** l'extrémité, loin du fond (22) de l'espace (20) de réception du tube (119) polaire est fermée par l'actionnement (146) manuel d'urgence introduit dans le tube (119) polaire.
